# EUROPEAN PATENT SPECIFICATION

(11) **EP 4 650 932 B1**
(45) Date of publication and mention of the grant of the patent: **08.04.2026**
(21) Application number: 25174434.8
(22) Date of filing: 06.05.2025
(51) Int. Cl.: G06F 3/06, G06F 12/0862, G06F 12/0868

(54) **SYSTEMS AND METHODS FOR GENERATING AND PROCESSING PREFETCH REQUESTS**
SYSTEME UND VERFAHREN ZUR ERZEUGUNG UND VERARBEITUNG VON VORAUSLADEANFRAGEN
SYSTÈMES ET PROCÉDÉS DE GÉNÉRATION ET DE TRAITEMENT DE DEMANDES DE PRÉEXTRACTION

(30) Priority: 15.05.2024 US 202463647955 P; 22.07.2024 US 202418780089
(43) Date of publication of application: 19.11.2025
(73) Proprietor: Samsung Electronics Co., Ltd., Suwon-si, Gyeonggi-do 16677 (KR)
(72) Inventor: LI, Zongwang, San Jose, CA 95134 (US); PITCHUMANI, Rekha, San Jose, CA 95134 (US); KI, Yang Seok, San Jose, CA 95134 (US)
(74) Representative: Kuhnen & Wacker Patent- und Rechtsanwaltsbüro PartG mbB

(56) References cited:
- US-A1- 2020 034 061
- US-B2- 11 704 249

## Description

### FIELD

One or more aspects of embodiments according to the present disclosure relate to storage devices, and more particularly to generating and processing prefetch requests for a storage device.

### BACKGROUND

An application may interact with a storage or memory device (collectively referenced as storage device) for reading (or loading) and writing (or storing) data. Latencies are generally involved in accessing the storage device. The type of latency involved may depend on the storage medium included in the storage device. Certain storage media have lower latencies than other storage media.

The above information disclosed in this Background section is only for enhancement of understanding of the background of the present disclosure, and therefore, it may contain information that does not form prior art.

US 2020/034061 A1 discloses dynamically changing between a latency-focused read operation and a bandwidth-focused read operation.

### SUMMARY

The invention is set out in the appended set of claims. One or more embodiments of the present disclosure are directed to a storage device comprising a first storage medium, a second storage medium, and a processor. The processor is configured to: receive from a computing device a first request for first data, the first request for first data including a first indicia; select a first mode of processing of the first request based on the first indicia; based on selecting the first mode of processing of the first request, transmit the first data to the computing device; receive from the computing device a second request for second data, the second request for second data including a second indicia; select a second mode of processing of the second request based on the second indicia; based on selecting the second mode of processing of the second request, determine a response type for a second response based on a location of the second data; determine priority of the first request relative to the second request; and process the first request based on the determined priority.

In some embodiments, the first indicia includes a value for indicating the first request as a load or store request.

In some embodiments, the processor is configured to select the first mode of processing based on the first indicia indicating the first request as the load or store request.

In some embodiments, the second indicia includes a value for indicating the second request as a prefetch request.

In some embodiments, the processor is configured to select the second mode of processing based on the second indicia indicating the second request as the prefetch request.

In some embodiments, based on the processor selecting the second mode of processing, the processor is configured to: determine that the first data is stored in the first storage medium; and based on determining that the first data is stored in the first storage medium, retrieve the first data from the first storage medium and transmit the first data to the computing device.

In some embodiments, the first storage medium includes volatile memory.

In some embodiments, based on the processor selecting the second mode of processing, the processor is configured to: determine that the second data is stored in the second storage medium; and based on determining that the second data is stored in the second storage medium, transmit the second response to the computing device; and retrieve the second data from the second storage medium to the first storage medium.

In some embodiments, the first storage medium includes volatile memory, and the second storage medium includes non-volatile memory.

One or more embodiments of the present disclosure are also directed to a method that includes: receiving from a computing device a first request for first data, the first request for first data including a first indicia; selecting a first mode of processing of the first request based on the first indicia; based on selecting the first mode of processing of the first request, transmitting the first data to the computing device; receiving from the computing device a second request for second data, the second request for second data including a second indicia; selecting a second mode of processing of the second request based on the second indicia; based on selecting the second mode of processing of the second request, determining a response type for a second response based on a location of the second data; determining priority of the first request relative to the second request; and processing the first request based on the determined priority.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a system for generating and processing prefetch requests for a storage device according to one or more embodiments;
FIG. 2 depicts a block diagram of a host interface controller coupled to a storage controller over one or more data communication links according to one or more embodiments;
FIG. 3 depicts a block diagram of one or more cache levels for storing data for use by an application according to one or more embodiments;
FIG. 4 depicts a conceptual layout diagram of a command or response that may be generated by respectively a host metadata unit or a prefetch responder according to one or more embodiments;
FIG. 5 depicts a flow diagram of a process for generating and processing prefetch requests according to one or more embodiments;
FIG. 6 depicts another flow diagram of a process for generating and processing prefetch requests according to one or more embodiments; and
FIG. 7 depicts a flow diagram of a process for prefetching data by the host according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

In general terms an application on a host computing device (referred to as a "host") may need to store and load data while the application is executed. If data that is to be loaded is present in the host's cache memory or primary memory (collectively referred to as host memory), there may be no need to access an auxiliary storage device where the data may be stored. The data may be retrieved from the host memory with low latency.

If the data is not present in the host memory (e.g., a cache miss), the data may be retrieved from the storage device and/or memory expansion device (e.g., a CXL.mem/CXL.cache device) (collectively referred to as a "storage device"). The latencies involved in accessing the storage device may differ depending on the storage medium storing the data. For example, the storage device may have both a volatile storage medium (e.g., dynamic random access memory (DRAM)) and a non-volatile storage medium (NVM) (e.g., NAND flash memory). The latencies of the volatile storage medium may be lower than the latencies of the non-volatile storage medium.

In order to benefit from the relatively fast access time of the host memory, data (e.g., frequently accessed data) may be read from the storage device and prefetched into the host memory. However, the variable and unpredictable latencies that may result from prefetching data from the storage device (e.g., due to the difference in latencies between the NVM and DRAM) may result in performance downgrade of the device.

For example, if the data that is to be prefetched is stored in the NVM, the data may still be in the process of being retrieved (due to the longer latency associated with the NVM) when the application is ready to use the data. This may result in a cache miss, causing the host to issue a normal (e.g., non-prefetch) load or store command for the same data. The prefetch attempt may thus turn to be useless.

In some architectures, a stalled prefetch request may unnecessarily increase traffic, reduce throughput of the host and/or storage device, and consume extra memory bandwidth. For example, some host devices may include additional buffers (e.g., a fill buffer) or queues (e.g., a superqueue) between the different cache levels. A queue may be used, for example, between a level 3 (L3) cache and a level 2 (L2) cache to hold entries to be moved from the L3 cache to the L2 cache. Further, a buffer between the L2 cache and a level 1 (L1) cache may be used to hold entries to be moved from the L2 cache to the L1 cache. The buffer/queue may store data for regular (non-prefetch) load/store requests as well as prefetch requests. When there are too many prefetch attempts with long latency, and the buffer and queues have limited capacity, the buffer and queues may become full quickly. Because regular load/store commands also use the buffer/queue, when the buffer/queue is full, the processing of regular load/store commands by a central processing unit (CPU) core may be stalled, resulting in degraded performance of the host.

In general terms, embodiments of the present disclosure are directed to systems and methods for generating and processing prefetch requests for a storage device. In some embodiments, the host may include a host controller configured with a host metadata unit. The host metadata unit may be configured to add a flag or tag to a load or store request (hereinafter simply referred to as a data request or command), for indicating whether the data request is a prefetch request or a regular data request.

In some embodiments, the storage device may include a device controller configured with a device metadata unit. The device metadata unit may be configured to receive the data request and determine, based on the value of the flag or tag, whether the request is a prefetch request or a regular data request. If the request is a regular data request, the device metadata unit may route the request to a load/store unit. The load/store unit may forward the request to a cache controller to retrieve and forward the requested data to the host.

If the request is a prefetch request, the device metadata unit may route the request to a prefetch unit. The prefetch unit may route the prefetch request to a prefetch responder. The prefetch responder may determine whether the requested data is stored in the volatile memory (e.g., DRAM) or NVM (e.g., NAND). If the requested data is stored in the volatile memory (e.g., a volatile memory hit), the data may be retrieved from the DRAM and returned to the host as a response to the prefetch request.

In some embodiments, if the requested data is stored in the NVM (e.g., a volatile memory miss), the data may be prefetched from the NVM to the volatile memory, but not returned to the host as a response to the prefetch request. Instead, the prefetch responder may respond with a response that includes an indication that the data is not available for prefetching (referred to as a no-data response). This may prevent the data that is prefetched with the higher latency to unnecessarily fill the buffer and queue, and help improve CPU core utilization.

In some embodiments, the latency incurred in transmitting the no-data prefetch response is similar to the latency incurred in retrieving and transmitting data from the volatile memory. This allows the latency of prefetch responses to be substantially the same regardless of whether there is a hit or miss of the volatile memory. This may help avoid performance downgrade of the host CPUs(applications) due to variable latency of the storage device.

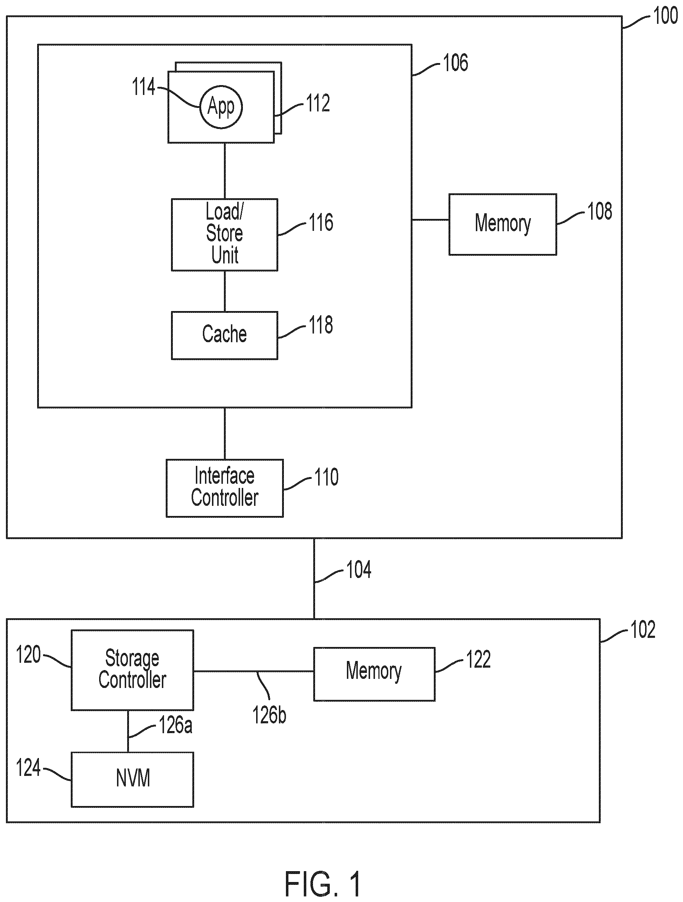

FIG. 1 depicts a block diagram of a system for generating and processing prefetch requests for a storage device according to one or more embodiments. The system may include a host computing device ("host") 100 coupled to an attached storage device 102 over one or more data communication links 104. In some embodiments, the data communication links 104 may include various general-purpose interfaces such as, for example, Ethernet, Universal Serial Bus (USB), and/or any wired or wireless data communication link.

The host 100 may include a processor 106, primary memory 108, and host interface controller 110. The processor 106 may include one or more central processing unit (CPU) cores 112 configured to run one or more applications 114 based on computer program instructions stored in the primary memory 108. The primary memory 108 may include volatile memory (e.g., random access memory (RAM)) and/or non-volatile memory (e.g., read only memory (ROM)). For example, the primary memory 108 may include a dynamic random access memory (DRAM) for storing the computer program instructions and/or data generated by the storage device 102.

The application 114 may be any application configured to transmit requests (e.g., load and store requests) to the storage device 102. For example, the application 114 may be a big data analysis application, e-commerce application, database application, machine learning application, and/or the like. Results of the data requests may be used by the application 114 to generate an output.

In some embodiments, load and store requests (collectively referred to as data requests) are processed by a load/store unit 116 during the running of the application 114. In some embodiments, the load/store unit 116 interfaces with a cache memory 118 (also simply referred to as "memory" or "cache") to process the data requests. The cache memory 118 may be dedicated to one of the CPU cores 112, or shared by various ones of the CPU cores.

The cache memory 118 may include, for example, a level one (L1) cache coupled to level two (L2) cache coupled to a last level or level 3 (L3) cache. The L3 cache may in turn be coupled to the primary memory 108. In some embodiments, one or more of the L1, L2, or L3 cache may be included as part of the load/store unit 116 and/or the primary memory 108.

In order for an application 114 to use data generated by the storage device or memory expander 102, the data may be loaded into the cache memory 118, and the application 114 may consume the data from the cache memory 118. If the data to be consumed is not already in the cache memory 118, the load/store unit 116 may query other memory devices in the memory hierarchy to find the data. For example, if the data that is sought is not in the L1 cache, the load/store unit 116 may query the L2 cache, and if not in the L2 cache, query the L3 cache, and if not in the L3 cache, query the primary memory 108. If the data is not in the primary memory 108, the load/store unit 116 may request the data from the storage device or memory expander 102 via the host interface controller 110.

The host interface controller 110 may include physical connections as well as software instructions which may be executed by the processor 106. In some embodiments, the host interface controller 110 allows the host 100 and the storage device 102 to send and receive data using a protocol such as, for example, CXL, although embodiments are not limited thereto.

In addition or in lieu of CXL, the host interface controller 110 may use other protocols such as Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

In some embodiments, the host interface controller 110 may be configured to receive prefetch requests and regular data requests from the load/store unit 116. The load/store unit 116 may generate a regular data request to the storage device 102 in response to execution of an instruction by the application 114 that uses data. A cache miss may occur when the application 114 if the data is not available in the cache 118 or the primary memory 108. In this case, the load/store unit 116 may request the data from the storage device or memory expander 102.

Latencies are generally involved in retrieving data from the storage device or memory expander 102. For certain types of data (e.g., frequently accessed data), it may be desirable to prefetch the data from the storage device 102 into the faster cache memory 118 if the data is not already present in the cache memory 118 or the primary memory 108. In this regard, the processor 106 (e.g., the load/store unit 116) may be configured to watch instructions or data being requested by the application 114, and recognize the next elements of the program that might be needed. The load/store unit 116 may transmit a prefetch request for data associated with the next elements. The prefetch request may be transmitted prior to execution of the instruction that uses the data.

The storage device 102 may take the form of a solid state drive (SSD), persistent memory, and/or the like. In some embodiments, the storage device 102 may include (or is embodied as) an SSD with cache coherency and/or computational capabilities.

In some embodiments, the storage device 102 may include a storage controller 120, storage memory 122, and non-volatile memory (NVM) 124. In some embodiments, the storage device 102 may be configured to present a memory space accessible to the host 100 using memory load/store requests, and the size of the memory space may be based on a size of the NVM 124. In such embodiments, the storage device 102 may be referred to as a "memory expander" or "memory expansion device" (e.g., because a size of a memory is expanded using the NVM 124). The storage device 102 may prefetch data from the NVM 124 to the storage memory 122 to reduce data access latencies.

The storage memory 122 may be high-performing memory of the storage device 102, and may include (or may be) volatile memory, for example, such as DRAM, but the present disclosure is not limited thereto, and the storage memory 122 may be any suitable kind of high-performing volatile or non-volatile memory. Although a single storage memory 122 is depicted for simplicity sake, a person of skill in the art should recognize that the storage device 102 may include other local memory for temporarily storing other data for the storage device 102.

In some embodiments, the storage memory 122 is used and managed as cache memory. In this regard, the storage memory (also referred to as a cache) 122 may store copies of data stored in the NVM 124. For example, data that is requested by the load/store unit 116 in a prefetch request may be copied from the NVM 124 to the storage memory 122 if not already there, for allowing the data to be retrieved from the storage memory 122 instead of the NVM 124. In some embodiments, the storage memory 122 may have a lower access latency than the NVM 124.

The NVM 124 may persistently store data received, for example, from the host 100. The NVM 124 may include, for example, NAND flash memory, but the present disclosure is not limited thereto, and the NVM 124 may include any suitable kind of memory for persistently storing the data according to an implementation of the storage device 102 (e.g., magnetic disks, tape, optical disks, and/or the like).

The storage controller 120 may be connected to the NVM 124 and the storage memory 122 over one or more storage interfaces 126a, 126b (collectively referenced as 126). The storage controller 120 may receive data requests from the host 100, and transmit commands to and from the NVM 124 and/or storage memory 122 for fulfilling the requests. In this regard, the storage controller 120 may include at least one processing component embedded thereon for interfacing with the host 100, the storage memory 122, and the NVM 124. The processing component may include, for example, a digital circuit (e.g., a microcontroller, a microprocessor, a digital signal processor, or a logic device (e.g., a field programmable gate array (FPGA), an application-specific integrated circuit (ASIC), and/or the like)) capable of executing data access instructions (e.g., via firmware and/or software) to provide access to and from the data stored in the storage memory 122 or NVM 124 according to the data access instructions.

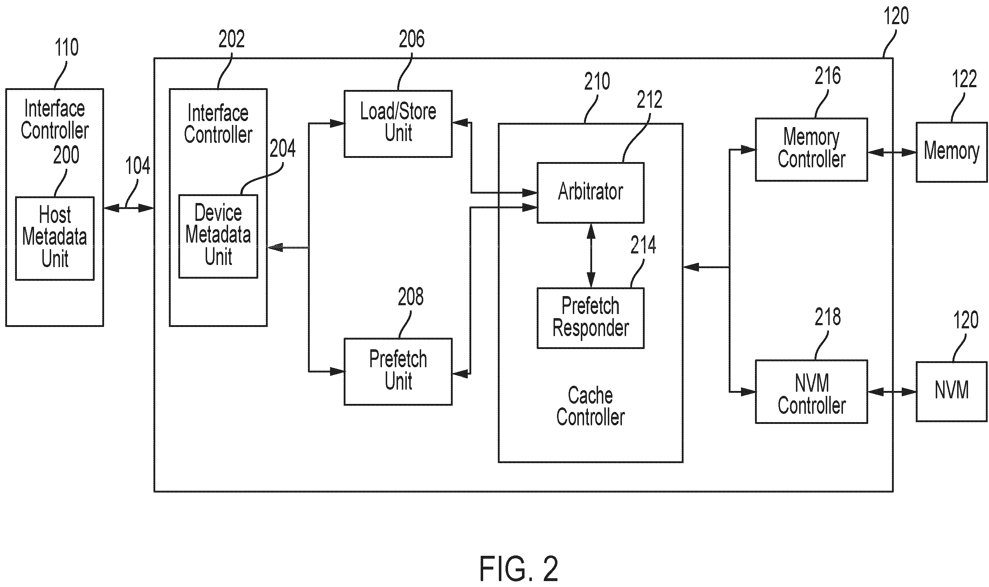

FIG. 2 depicts a block diagram of the host interface controller 110 coupled to the storage controller 120 over the one or more data communication links 104 according to one or more embodiments. In some embodiments, the host interface controller 110 may include a host metadata unit 200. The host metadata unit 200 may be configured to include a flag, a tag, or metadata (also referred to as an indicia), to a data request received from the load/store unit 116. In some embodiments, the indicia is added to a metadata field of a command that is generated by the interface controller 110 in response to the data request. The command may adhere to the CXL.mem protocol, although embodiments are not limited thereto.

In some embodiments, different flags or values may be included into the metadata field depending on the type of data request received from the load/store unit 116. For example, if the data request is a prefetch request, a prefetch flag or value is included into the metadata field. If the data request is a regular load/store request, the metadata field may store no value or a value to indicate that the data request is a regular load/store request. The use of the metadata field to store flags accordingly may allow the storage controller 120 to differentiate prefetch commands from normal load/store commands.

In some embodiments, the storage controller 120 may include a device interface controller 202 configured to receive data access commands from the host interface controller 110. In this regard, the device interface controller 202 may include physical connections as well as software instructions for sending and receiving data to and from the host interface controller 110 using a protocol such as, for example, CXL, although embodiments are not limited thereto.

In some embodiments, the storage controller 120 may include a device metadata unit 204 configured to analyze the value stored in the metadata field of the received command. The device metadata unit 204 may route the command to a load/store unit 206 or a prefetch unit 208 depending on the value stored in the metadata field. For example, if the metadata field includes a prefetch flag or value, the command may be routed to the prefetch unit 208. If the metadata field includes a value that indicates a normal load/store command (or no value at all), the command may be routed to the load/store unit 206.

The load/store unit 206 and the prefetch unit 208 may generate commands for loading/storing data from/to a specified memory address. The command may be received by a cache controller 210. The cache controller 210 may be configured to determine whether the requested data is stored in the storage memory 122 (e.g., a cache hit), and issue appropriate requests to a memory controller 216 or NVM controller 218 depending on the determination. The cache controller 210 may also be configured to manage use of the storage memory 122 according to a cache management algorithm.

In some embodiments, the cache controller 210 may include an arbitrator unit 212 and a prefetch responder 214. The arbitrator unit 212 may be configured to receive commands from the load/store unit 206 and the prefetch unit 208, and determine an order in which the received commands are to be processed by the cache controller 210. In some embodiments, the arbitrator unit 212 may give preference or priority to commands received from the load/store unit 206 over commands received from the prefetch unit 208.

In some embodiments, the cache controller 210 may process regular load/store commands by determining whether the requested data is stored in the storage memory 122 or the NVM 124. The requested data may be retrieved from the storage memory 122 or the NVM 124 via respectively the memory controller 216 or the NVM controller 218, and returned for storing in the host cache memory 118.

In processing prefetch commands, the cache controller 210 similarly may determine whether the requested data is stored in the storage memory 122 or the NVM 124. In some embodiments, if the requested data is stored in the storage memory 122, the data may be retrieved via the memory controller 216 and returned as a response to the prefetch request to be stored in the host cache memory 118. In some embodiments, the prefetch responder 214 may generate and issue a response in addition to the returned data. The response may include an indicia that indicates that data is (or will be) returned in response to the prefetch request. The indicia may be added to a metadata field of the generated response. The response may adhere, for example, to the CXL.mem protocol, although embodiments are not limited thereto.

If the requested data is stored in the NVM 124, the cache controller 210 may prefetche the data from the NVM 124 to the storage memory 122. However, in some embodiments, the prefetched data may be not returned as a response to the prefetch command. Instead, in some embodiments, the prefetch responder 214 may generate and issue a response that indicates that no data will be returned. For example, the response may include a metadata field that stores a no data flag or value. The response may adhere to, for example, the CXL.mem protocol, although embodiments are not limited thereto.

The return of a no-data response by the storage controller 120 may allow the prefetch latency of the storage device to be reduced from an NVM read latency, to memory device latency. In addition, the filling of a queue or buffer associated with the cache memory 118 with slow prefetched data may be minimized or avoided.

Although one or more components of FIG. 2 are assumed to be separate components, a person of skill in the art will recognize that the functionality of the components may be combined or integrated into a single component, or further subdivided into further sub-components without departing from the scope of the inventive concept.

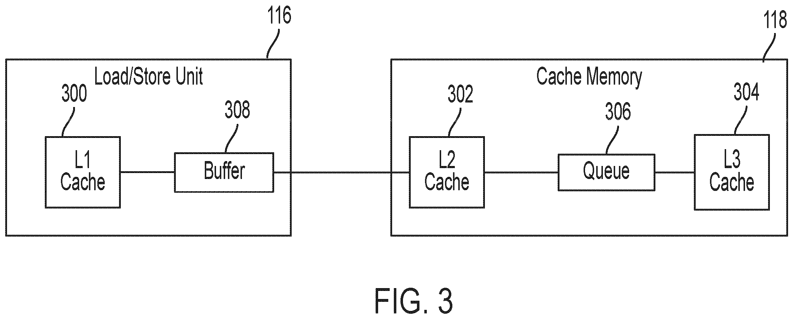

FIG. 3 depicts a block diagram of one or more cache levels for storing data for use by an application 114 according to one or more embodiments. The cache levels may include an L1 cache 300, L2 cache 302, and an L3 cache 304. A queue (e.g., a super queue) 306 may be placed in-between the L3 cache 304 and the L2 cache 302. The queue 306 may allow data from the L3 cache 304 to be temporarily stored until moved into the L2 cache 302.

A buffer (e.g., a fill buffer) 308 may be placed in-between the L1 cache 300 and the L2 cache 302. The buffer 308 may allow data from the L2 302 cache to be temporarily stored until moved into the L1 cache 300.

In some embodiments, data that is retrieved from the storage device 102 is placed in the L3 cache 304, and moved to the L2 cache 302, and then to the L1 cache 300 via the queue 306 and buffer 308 when the data is requested for use by the application. A data entry in the queue 306 may be freed when the entry is retrieved and stored in the L2 cache 302. A data entry in the buffer 308 may be freed when the entry is retrieved and stored in the L1 cache 300. The data is provided to the application 114 from the L1 cache 300 when the application is ready to use the data to perform, for example, a computation.

In some embodiments, the queue 306 and buffer 308 may have a limited number of available entries for storing data. When the entries of the queue 306 and buffer 308 are slow to be freed, the queue 306 and buffer 308 may become full. When the queue 306 and buffer 308 are full, execution of regular load/store commands that use the same queue 306 and buffer 308 may be blocked, resulting on degraded system performance.

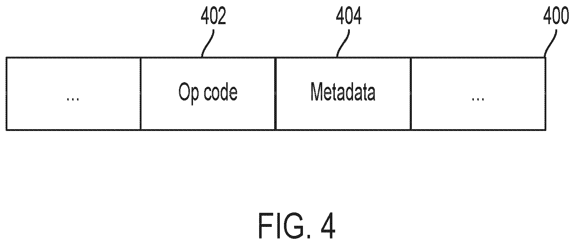

FIG. 4 depicts a conceptual layout diagram of a command or response that may be generated by respectively the host metadata unit 200 or the prefetch responder 214 according to one or more embodiments. The command/response may include one or more fields including an opcode field 402 and a metadata field 404. The opcode 402 field may specify which, if any, operation needs to be performed. For example, for a command generated by the host metadata unit 200, the operation may be a load operation or a store operation. For a response generated by the prefetch responder 214, the opcode 402 field may indicate the operation as a response with data operation, or may indicate the operation as a response without data operation.

In some embodiments, the metadata field 404 of a command generated by the host metadata unit 200 may identify the command as a prefetch command or a regular load/store command. In some embodiments, the metadata field of a response generated by the prefetch responder 214 may store a first value indicating that no-data is to be returned, or a second value indicating that data is or will be returned.

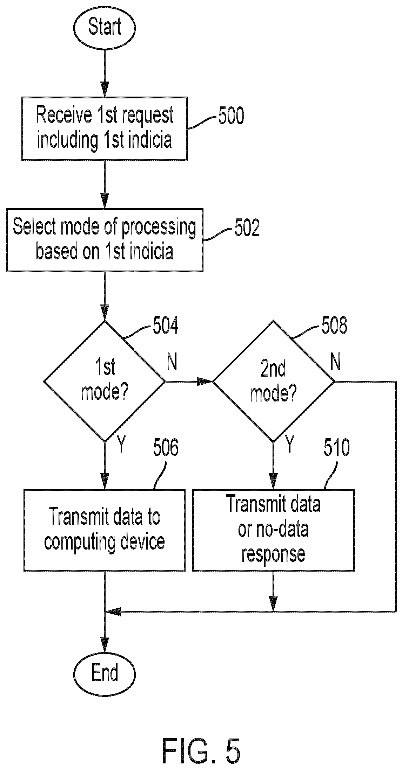

FIG. 5 depicts a flow diagram of a process for generating and processing prefetch requests according to one or more embodiments. The process starts, and in act 500, the storage controller 120 (e.g., the interface controller 202) may receive a first request including a first indicia. The request may be a prefetch request or a regular load/store request. In some embodiments, the first indicia may indicate the type of request. The first indicia may be stored in a metadata field of the request.

In act 502, the storage controller 120 (e.g., the device metadata unit 204) may select a mode of processing the request based on the first indicia. For example, a first mode of processing may be selected based on the first indicia indicating the first request as a load/store request. A second mode of processing may be selected based on the first indicia indicating the first request as a prefetch request.

In act 504, a determination is made as to whether the first mode of processing has been selected. If the answer is YES, the load/store unit 206 may transmit a regular load/store command to the cache controller 210.

In act 506, the requested data may be retrieved from the memory 122 or the NVM 124, and transmitted to the computing device.

Referring again to act 504, if the answer is NO, and the first mode of processing has not been selected, a determination is made, in act 508, as to whether a second mode of processing has been selected. If the answer is YES, the received request is a prefetch request, and a response to the prefetch request is returned in act 510. In some embodiments, the response may include transmittal of the requested data if the data is found in the storage memory 122. In some embodiments, the response may nclude transmittal of a no-data response if the data is found in the NVM 124. In this manner, a response to a prefetch request may be made with consistent or uniform latency regardless of whether the requested data is retrieved from the storage memory 122 or the NVM 124.

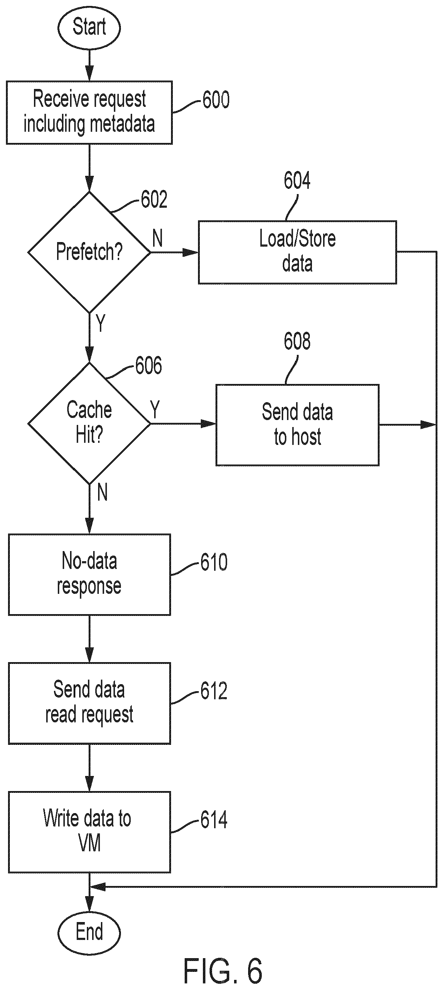

FIG. 6 depicts another flow diagram of a process for generating and processing prefetch requests according to one or more embodiments. The process starts, and in act 600, the storage controller 120 (e.g., the interface controller 202) may receive a request including metadata stored in a metadata field of the request. The metadata may identify the request as a prefetch request or a regular load/store request.

In act 602, the storage controller 120 (e.g., the device metadata unit 204) may determine, based on the stored metadata, whether the request is a prefetch request. If the answer is NO, the request may be a regular load/store request, and the requested data is loaded/stored from/to the storage memory 122 or NVM 124 in act 604.

Referring again to act 602, if the storage controller 120 (e.g., the device metadata unit 204) may determine, based on the stored metadata, that the request is a prefetch request, a determination is made, in act 606, as to whether the prefetch request results in a cache hit (e.g., a hit of the storage memory 122). A cache hit may occur if the requested data is available in the storage memory 122.

If the answer is YES, and a cache hit has occurred, the requested data may be retrieved from the storage memory 122 and transmitted to the host 100 (e.g., the load/store unit 116) as a response to the prefetch request.

If the answer is NO, and a cache miss has occurred, the prefetch responder 214 may generate a no-data response in act 610. The no-data response may include, for example, an indicia in the metadata field of the response that indicates that no data is to be returned.

In act 612, the cache controller 210 may issue a data read request to the NVM controller 218.

In act 614, the read data may be written to the storage memory 122. The read data may be not returned to the host 100 as a response to the prefetch request. In this manner, the data may be available in the storage memory 122 when the application 114 is ready to use the data and a regular load/store command is issued.

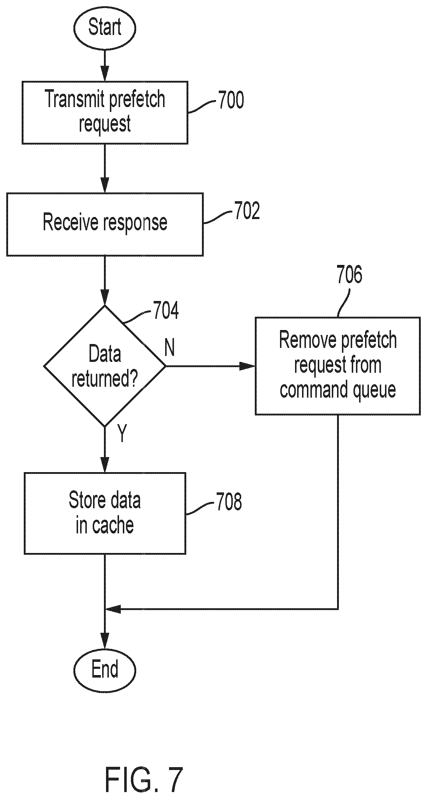

FIG. 7 depicts a flow diagram of a process for prefetching data by the host 100 according to one or more embodiments. The process starts, and in act 700 the processor 106 (e.g., the load/store unit 116) may transmit a prefetch request. The transmitted prefetch request may be stored in a command queue (not shown).

In act 702, the processor 106 (e.g., the load/store unit 116) may receive a response to the prefetch request from the storage device 102.

In act 704, a determination may be made as to whether the response includes the requested the data. If the answer is NO, the prefetch request may be removed from the command queue in act 706, and the process ends. In some embodiments, a no data response may be received from the storage device, and the prefetch request may be removed in response to the no data response.

Referring again to act 704, if the response includes the requested data, the data may be stored in the cache memory 118 in act 708, and may be ready to be used by the application when an associated instructions is executed by the application.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function may be performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for generating and processing prefetch requests have been specifically described and illustrated herein, many modifications and variations will be apparent to those skilled in the art. Accordingly, it is to be understood that systems and methods for generating and processing prefetch requests constructed according to principles of this disclosure may be embodied other than as specifically described herein. The disclosure is defined in the following claims.

## Claims

1. A storage device (102) comprising:
a first storage medium (122);
a second storage medium (124); and
a processor (120) configured to:
receive from a computing device (100) a first request for first data, the first request for the first data including a first indicia;
select a first mode of processing of the first request based on the first indicia;
based on selecting the first mode of processing of the first request, transmit the first data to the computing device (100);
receive from the computing device (100) a second request for second data, the second request for second data including a second indicia;
select a second mode of processing of the second request based on the second indicia;
based on selecting the second mode of processing of the second request, determine a response type for a second response based on a location of the second data;
determine priority of the first request relative to the second request; and
process the first request based on the determined priority.

2. The storage device (102) of claim 1, wherein the first indicia includes a value for indicating the first request as a load or store request.

3. The storage device (102) of claim 2, wherein the processor (120) is configured to select the first mode of processing based on the first indicia indicating the first request as the load or store request.

4. The storage device (102) of any one of claims 1 to 3, wherein the second indicia includes a value for indicating the second request as a prefetch request.

5. The storage device (102) of claim 4, wherein the processor (120) is configured to select the second mode of processing based on the second indicia indicating the second request as the prefetch request.

6. The storage device (102) of claim 5, wherein, based on the processor (120) selecting the second mode of processing, the processor (120) is configured to:
determine that the first data is stored in the first storage medium (122); and
based on determining that the first data is stored in the first storage medium (122), retrieve the first data from the first storage medium (122) and transmit the first data to the computing device (100).

7. The storage device (102) of claim 5, wherein, based on the processor (120) selecting the second mode of processing, the processor (120) is configured to:
determine that the second data is stored in the second storage medium (124); and
based on determining that the second data is stored in the second storage medium (124), transmit the second response to the computing device (100); and
retrieve the second data from the second storage medium (124) to the first storage medium (122).

8. A method comprising:
receiving (500) from a computing device (100) a first request for first data, the first request for data including a first indicia;
selecting (502) a first mode of processing of the first request based on the first indicia;
based on selecting (504) the first mode of processing of the first request, transmitting (506) the first data to the computing device (100);
receiving from the computing device (100) a second request for second data, the second request for second data including a second indicia;
selecting (508) a second mode of processing of the second request based on the second indicia;
based on selecting (508) the second mode of processing of the second request, determining a response type for a second response based on a location of the second data;
determining priority of the first request relative to the second request; and
processing the first request based on the determined priority.

9. The method of claim 8, wherein the first indicia includes a value for indicating the first request as a load or store request.

10. The method of claim 9 further comprising:
selecting the first mode of processing based on the first indicia indicating the first request as the load or store request.

11. The method of any one of claims 8 to 10, wherein the second indicia includes a value for indicating the second request as a prefetch request.

12. The method of claim 11 further comprising:
selecting the second mode of processing based on the second indicia indicating the second request as the prefetch request.

13. The method of claim 12 wherein, based on selecting the second mode of processing:
determining that the first data is stored in a first storage medium (122); and
based on determining that the first data is stored in the first storage medium (122), retrieving the first data from the first storage medium (122) and transmitting the first data to the computing device (100).

14. The method of claim 12, wherein, based on selecting the second mode of processing:
determining that the second data is stored in a second storage medium (124); and
based on determining that the second data is stored in the second storage medium (124), transmitting the second response to the computing device (100); and
retrieving the second data from the second storage medium (124) to a first storage medium (122).

## Patentansprüche

1. Eine Speichervorrichtung (102), umfassend:
ein erstes Speichermedium (122);
ein zweites Speichermedium (124); und
einen Prozessor (120), der derart konfiguriert ist, dass er:
von einer Computervorrichtung (100) eine erste Anforderung für erste Daten empfängt, wobei die erste Anforderung für die ersten Daten eine erste Kennzeichnung enthält;
einen ersten Verarbeitungsmodus für die erste Anforderung auf der Grundlage des ersten Kennzeichens auswählt;
auf der Grundlage der Auswahl des ersten Verarbeitungsmodus für die erste Anforderung, die ersten Daten an die Computervorrichtung (100) überträgt;
eine zweite Anforderung für zweite Daten von der Computervorrichtung (100) empfängt, wobei die zweite Anforderung für zweite Daten ein zweites Kennzeichen enthält;
einen zweiten Verarbeitungsmodus für die zweite Anforderung auf der Grundlage des zweiten Kennzeichens auswählt;
basierend auf der Auswahl des zweiten Verarbeitungsmodus für die zweite Anforderung, einen Antworttyp für eine zweite Antwort auf der Grundlage eines Speicherorts der zweiten Daten bestimmt;
die Priorität der ersten Anforderung relativ zur zweiten Anforderung bestimmt; und
die erste Anforderung auf der Grundlage der bestimmten Priorität verarbeitet.

2. Die Speichervorrichtung (102) nach Anspruch 1, wobei die erste Kennzeichnung einen Wert zum Kennzeichnen der ersten Anforderung als Lade- oder Speicheranforderung umfasst.

3. Die Speichervorrichtung (102) nach Anspruch 2, wobei der Prozessor (120) derart konfiguriert ist, dass er den ersten Verarbeitungsmodus auf der Grundlage des ersten Indizes auswählt, der die erste Anforderung als Lade- oder Speicheranforderung angibt.

4. Die Speichervorrichtung (102) nach einem der Ansprüche 1 bis 3, wobei die zweite Kennzeichnung einen Wert zum Kennzeichnen der zweiten Anforderung als Vorabruf-Anforderung umfasst.

5. Die Speichervorrichtung (102) nach Anspruch 4, wobei der Prozessor (120) derart konfiguriert ist, dass er den zweiten Verarbeitungsmodus auf der Grundlage des zweiten Indizes auswählt, der die zweite Anforderung als Vorabruf-Anforderung angibt.

6. Die Speichervorrichtung (102) nach Anspruch 5, wobei der Prozessor (120) auf der Grundlage der Auswahl des zweiten Verarbeitungsmodus durch den Prozessor (120) derart konfiguriert ist, dass er
feststellt, dass die ersten Daten im ersten Speichermedium (122) gespeichert sind; und
auf der Grundlage der Feststellung, dass die ersten Daten im ersten Speichermedium (122) gespeichert sind, die ersten Daten aus dem ersten Speichermedium (122) abruft und die ersten Daten an die Computervorrichtung (100) überträgt.

7. Die Speichervorrichtung (102) nach Anspruch 5, wobei der Prozessor (120) auf der Grundlage der Auswahl des zweiten Verarbeitungsmodus durch den Prozessor (120) derart konfiguriert ist, dass er:
feststellt, dass die zweiten Daten im zweiten Speichermedium (124) gespeichert sind; und
auf der Grundlage der Feststellung, dass die zweiten Daten im zweiten Speichermedium (124) gespeichert sind, die zweite Antwort an die Computervorrichtung (100) überträgt; und
die zweiten Daten aus dem zweiten Speichermedium (124) in das erste Speichermedium (122) abruft.

8. Ein Verfahren, umfassend:
Empfangen (500) einer ersten Anfrage für erste Daten von einer Computervorrichtung (100), wobei die erste Datenanfrage ein erstes Kennzeichen enthält;
Auswählen (502) eines ersten Verarbeitungsmodus für die erste Anforderung auf der Grundlage des ersten Kennzeichens;
auf der Grundlage der Auswahl (504) des ersten Verarbeitungsmodus für die erste Anforderung, Übertragen (506) der ersten Daten an die Computervorrichtung (100);
Empfangen einer zweiten Anforderung für zweite Daten von der Computervorrichtung (100), wobei die zweite Anforderung für zweite Daten ein zweites Kennzeichen umfasst;
Auswählen (508) eines zweiten Verarbeitungsmodus für die zweite Anforderung basierend auf dem zweiten Kennzeichen;
basierend auf der Auswahl (508) des zweiten Verarbeitungsmodus für die zweite Anforderung, Bestimmen eines Antworttyps für eine zweite Antwort basierend auf einem Speicherort der zweiten Daten;
Bestimmen der Priorität der ersten Anforderung relativ zur zweiten Anforderung; und
Verarbeiten der ersten Anforderung basierend auf der bestimmten Priorität.

9. Das Verfahren nach Anspruch 8, wobei die erste Kennzeichnung einen Wert zum Kennzeichnen der ersten Anforderung als Lade- oder Speicheranforderung umfasst.

10. Das Verfahren nach Anspruch 9, ferner umfassend:
Auswählen des ersten Verarbeitungsmodus auf der Grundlage des ersten Indizes, der die erste Anforderung als Lade- oder Speicheranforderung angibt.

11. Das Verfahren nach einem der Ansprüche 8 bis 10, wobei die zweite Kennzeichnung einen Wert zum Kennzeichnen der zweiten Anforderung als Vorabruf-Anforderung umfasst.

12. Das Verfahren nach Anspruch 11, ferner umfassend:
Auswählen des zweiten Verarbeitungsmodus auf der Grundlage des zweiten Indizes, der die zweite Anforderung als Vorabruf-Anforderung angibt.

13. Das Verfahren nach Anspruch 12, wobei auf der Grundlage der Auswahl des zweiten Verarbeitungsmodus:
festgestellt wird, dass die ersten Daten in einem ersten Speichermedium (122) gespeichert sind; und
auf der Grundlage der Feststellung, dass die ersten Daten in dem ersten Speichermedium (122) gespeichert sind, die ersten Daten aus dem ersten Speichermedium (122) abgerufen und an die Computervorrichtung (100) übertragen werden.

14. Das Verfahren nach Anspruch 12, wobei auf der Grundlage der Auswahl des zweiten Verarbeitungsmodus:
festgestellt wird, dass die zweiten Daten in einem zweiten Speichermedium (124) gespeichert sind; und
basierend auf der Feststellung, dass die zweiten Daten in dem zweiten Speichermedium (124) gespeichert sind, die zweite Antwort an die Computervorrichtung (100) übertragen wird; und
die zweiten Daten aus dem zweiten Speichermedium (124) in ein erstes Speichermedium (122) abgerufen werden.

## Revendications

1. Un dispositif de stockage (102) comprenant :
un premier support de stockage (122) ;
un deuxième support de stockage (124) ; et
un processeur (120) configuré pour :
recevoir d'un dispositif informatique (100) une première demande de premières données, la première demande de premières données comprenant un premier indice ;
sélectionner un premier mode de traitement de la première requête sur la base du premier indice ;
sur la base de la sélection du premier mode de traitement de la première requête, transmettre les premières données au dispositif informatique (100) ;
recevoir du dispositif informatique (100) une deuxième requête pour des deuxièmes données, la deuxième requête pour les deuxièmes données comprenant un deuxième indice ;
sélectionner un deuxième mode de traitement de la deuxième requête sur la base du deuxième indice ;
sur la base de la sélection du deuxième mode de traitement de la deuxième requête, déterminer un type de réponse pour une deuxième réponse sur la base d'un emplacement des deuxièmes données ;
déterminer la priorité de la première requête par rapport à la deuxième requête ; et
traiter la première requête sur la base de la priorité déterminée.

2. Le dispositif de stockage (102) selon la revendication 1, dans lequel le premier indice comprend une valeur pour indiquer la première requête comme une requête de chargement ou de stockage.

3. Le dispositif de stockage (102) selon la revendication 2, dans lequel le processeur (120) est configuré pour sélectionner le premier mode de traitement sur la base du premier indice indiquant la première requête comme étant la requête de chargement ou de stockage.

4. Le dispositif de stockage (102) selon l'une des revendications 1 à 3, dans lequel le deuxième indice comprend une valeur pour indiquer la deuxième requête comme une requête de prélecture.

5. Le dispositif de stockage (102) selon la revendication 4, dans lequel le processeur (120) est configuré pour sélectionner le deuxième mode de traitement sur la base du deuxième indice indiquant la deuxième requête comme étant la requête de prélecture.

6. Le dispositif de stockage (102) selon la revendication 5, dans lequel, sur la base du processeur (120) sélectionnant le deuxième mode de traitement, le processeur (120) est configuré pour :
déterminer que les premières données sont stockées dans le premier support de stockage (122) ; et
sur la base de la détermination que les premières données sont stockées dans le premier support de stockage (122), récupérer les premières données à partir du premier support de stockage (122) et transmettre les premières données au dispositif informatique (100).

7. Le dispositif de stockage (102) selon la revendication 5, dans lequel, sur la base du processeur (120) sélectionnant le deuxième mode de traitement, le processeur (120) est configuré pour :
déterminer que les deuxièmes données sont stockées dans le deuxième support de stockage (124) ; et
sur la base de la détermination que les secondes données sont stockées dans le deuxième support de stockage (124), transmettre la seconde réponse au dispositif informatique (100) ; et
récupérer les secondes données du deuxième support de stockage (124) vers le premier support de stockage (122).

8. Un procédé comprenant :
recevoir (500) une première requête de premières données provenant d'un dispositif informatique (100), la première requête de données comprenant un premier indice ;
sélectionner (502) un premier mode de traitement de la première requête sur la base du premier indice ;
sur la base de la sélection (504) du premier mode de traitement de la première requête, transmettre (506) les premières données au dispositif informatique (100) ;
recevoir du dispositif informatique (100) une deuxième requête pour des deuxièmes données, la deuxième requête pour des deuxièmes données comprenant un deuxième indice ;
sélectionner (508) un deuxième mode de traitement de la deuxième requête sur la base du deuxième indice ;
sur la base de la sélection (508) du deuxième mode de traitement de la deuxième requête, déterminer un type de réponse pour une deuxième réponse sur la base d'un emplacement des deuxièmes données ;
déterminer la priorité de la première requête par rapport à la deuxième requête ; et
traiter la première requête sur la base de la priorité déterminée.

9. Le procédé selon la revendication 8, dans lequel le premier indice comprend une valeur pour indiquer la première requête comme une requête de chargement ou de stockage.

10. Le procédé selon la revendication 9 comprenant en outre :
sélectionner le premier mode de traitement sur la base du premier indice indiquant la première requête comme étant la requête de chargement ou de stockage.

11. Le procédé selon l'une des revendications 8 à 10, dans lequel le deuxième indice comprend une valeur pour indiquer la deuxième requête comme une requête de prélecture.

12. Le procédé selon la revendication 11 comprenant en outre :
sélectionner le deuxième mode de traitement sur la base du deuxième indice indiquant la deuxième requête comme étant la requête de prélecture.

13. Le procédé selon la revendication 12, dans lequel, sur la base de la sélection du deuxième mode de traitement :
déterminer que les premières données sont stockées dans un premier support de stockage (122) ; et
sur la base de la détermination que les premières données sont stockées dans le premier support de stockage (122), récupérer les premières données à partir du premier support de stockage (122) et transmettre les premières données au dispositif informatique (100).

14. Le procédé selon la revendication 12, dans lequel, sur la base de la sélection du deuxième mode de traitement :
déterminer que les secondes données sont stockées dans un deuxième support de stockage (124) ; et
sur la base de la détermination que les secondes données sont stockées dans le deuxième support de stockage (124), transmettre la seconde réponse au dispositif informatique (100) ; et
récupérer les secondes données du deuxième support de stockage (124) vers un premier support de stockage (122).
